(19) **Europäisches Patentamt**

**European Patent Office**

**Office européen des brevets**

(11) Veröffentlichungsnummer: **0 304 719 B1**

(12) # EUROPÄISCHE PATENTSCHRIFT

(45) Veröffentlichungstag der Patentschrift: **22.12.93**

(21) Anmeldenummer: **88112929.0**

(22) Anmeldetag: **09.08.88**

(51) Int. Cl.⁵: **C08L 83/04**, C08J 3/03

Die Akte enthält technische Angaben, die nach dem Eingang der Anmeldung eingereicht wurden und die nicht in dieser Patentschrift enthalten sind.

(54) **Wässrige Silicondispersionen.**

(30) Priorität: **14.08.87 DE 3727180**

(43) Veröffentlichungstag der Anmeldung:
**01.03.89 Patentblatt 89/09**

(45) Bekanntmachung des Hinweises auf die Patenterteilung:
**22.12.93 Patentblatt 93/51**

(84) Benannte Vertragsstaaten:
**AT BE CH DE ES FR GB IT LI NL SE**

(56) Entgegenhaltungen:
EP-A- 0 143 877
FR-A- 1 464 314
FR-A- 2 350 387

DATABASE WPI, Nr. 78-00739, Derwent Publications Ltd, London, GB; & JP-A-52 136 228

(73) Patentinhaber: **WACKER-CHEMIE GMBH**
**Hanns-Seidel-Platz 4**
**D-81737 München(DE)**

(72) Erfinder: **Gamon, Norbert, Dr., Dipl.-Chem.**
**Im Domherrenfeld 1**
**D-2105 Seevetal 11(DE)**
Erfinder: **Braunsperger, Karl**
**Unterhadermark 86**
**D-8263 Burghausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind wäßrige Silicondispersionen auf der Grundlage von $\alpha,\omega$-Dihydroxypoly-organosiloxanen, Siliconharzen und (Organo)-Metallverbindung(en), wobei die genannten Silicondispersionen nach Verdampfen des Lösungsmittelanteils zu Elastomeren aushärten können.

Aus US 3 355 406 (ausgegeben am 28. November 1967, J. Cekada jr., Dow Corning Corporation) ist die Herstellung eines Latex aus im wesentlichen linearem Silicon und einem Silsesquioxan einer Korngroße von 1 bis 100 nm bekannt. EP-A 143 877 (veröffentlicht am 02. Juni 1985, W. Grape et al., Bayer AG) beschreibt stabile Siliconemulsionen bestehend aus $\alpha,\omega$-Dihydroxypolydiorganosiloxan, niedermolekularem Siliconharz, Katalysator und weiteren Stoffen.

Die vorliegende Erfindung unterscheidet sich von US 3 355 406 dadurch, daß das Silsesquioxan (Siliconharz) eine Teilchengröße von mindestens 200 nm hat, was dessen Herstellung wesentlich vereinfacht. Im Gegensatz zu EP-A 143 877 wird gemäß der vorliegenden Erfindung ein hochmolekulares Siliconharz eingesetzt mit der Folge, daß weniger Emulgier- und Thixotropiermittel benötigt wird.

Aufgabe der vorliegenden Erfindung war es, neue wäßrige Silicondispersionen bereitzustellen, welche über lange Zeit lagerstabil sind. Eine weitere Aufgabe der vorliegenden Erfindung war es, wäßrige Silicondispersionen mit einem relativ niedrigen Anteil an Emulgier- und/oder Thixotropiermittel bereitzustellen. Weiterhin war es Aufgabe der vorliegenden Erfindung, wäßrige Silicondispersionen auf möglichst einfache und kostengünstige Weise herzustellen.

Ferner war es Aufgabe der vorliegenden Erfindung, wäßrige Beschichtungssysteme und Dichtmassen auf Siliconbasis zu entwickeln, welche nach dem Abdampfen des Wassers zu Elastomeren aushärten, wobei die elastomeren Beschichtungen oder Dichtmassen gut auf dem Untergrund haften, auf den sie vor ihrer Aushärtung gebracht wurden.

Diese Aufgaben werden durch die vorliegende Erfindung gelöst durch wäßrige Silicondispersionen, herstellbar unter Verwendung der Ausgangsstoffe

a) in den endständigen Einheiten Hydroxylgruppen aufweisende Polydiorganosiloxane,
b) (Organo-)Metallverbindung(en),
dadurch gekennzeichnet,
daß sie zusätzlich als Ausgangsstoffe
c) hochmolekulare(s), in Toluol unlösliche(s) Siliconharz(e) einer mittleren Teilchengröße von mindestens $2.10^{-1}\mu$m.
der Formel

$$R_x SiO_{\frac{4-x}{2}} \qquad\qquad (II)$$

enthalten, worin

R    gleiche oder verschiedene Kohlenwasserstoffreste mit 1 bis 18 Kohlenstoffatomen, die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind, und

x    eine Zahl mit einem durchschnittlichen Wert von 0,5 bis 1,6 bedeutet,

wobei,
bezogen auf 100 Gewichtsteile a) Polydiorganosiloxan(e) 0,01 bis 10 Gewichtsteile b) (Organo-)Metallverbindung(en),
sowie 1 bis 150 Gewichtsteile c) Siliconharz(e) eingesetzt werden,
und wobei die
wäßrigen Silicondispersionen maximal 20 Gewichts-ppm, bezogen auf die Summe der Gewichte von eingesetzten

a) Polydiorganosiloxan(en)
b) (Organo-)Metallverbindung(en),
c) Siliconharz(en)
an
d) Siliconat(en)
als Ausgangsstoff(e) enthalten.

Vorzugsweise sind die vorstehend genannten Siliconharze c) so hochmolekular, daß sie keinen Erweichungspunkt besitzen.

Die als Ausgangsstoffe für die erfindungsgemäßen Dispersionen verwendbaren, in den endständigen Einheiten Hydroxylgruppen aufweisenden Polydiorganosiloxane sind insbesondere solche der Formel

$$HO\text{-}[SiR_2O]_n\text{-}H \qquad (I),$$

worin

R     gleiche oder verschiedene Kohlenwasserstoffreste mit 1 bis 18 Kohlenstoffatomen, die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind,

n     eine ganze Zahl von mindestens 200 bedeuten.

Die Polydiorganosiloxane gemäß Formel (I) werden entweder direkt emulgiert oder erst in der Emulsion hergestellt, durch Polymerisation bzw. Kondensation niedermolekularer cyclischer bzw. linearer hydroxyendständiger Polyorganosiloxane. Diese Verfahren sind in der Fachwelt bekannt. Obwohl durch obige Formel nicht angegeben, können in Formel (I) als mehr oder minder schwer vermeidbare Verunreinigungen bis zu 10 % der Siloxaneinheiten durch Einheiten der Formeln $R_3SiO_{1/2}$, $RSiO_{3/2}$ ersetzt sein, wobei R die oben angegebene Bedeutung hat.

Beispiele für Kohlenwasserstoffreste R sind Alkylreste, wie der Methyl-, Ethyl-, n-Propyl-, Isopropyl-, n-Butyl-, sec.-Butyl-, t-Butyl-, n-Pentyl-, neo-Pentylrest, iso-Pentylreste, Hexylreste, Heptylreste, Octylreste, Decylreste, Dodecylreste und Octadecylreste; Alkenylreste, wie der Vinylund der Allylrest; Arylreste, wie Phenyl- und Naphthylreste; Aralkylreste, wie der Benzylrest, $\alpha$- und $\beta$-Phenylreste; Alkarylreste, wie o-, m- und p-Tolylreste, Xylylreste; Ararylreste, wie Biphenylylreste.

Beispiele für substituierte Kohlenwasserstoffreste R sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)-ethylrest, der 1,1,2,2-Tetrafluorethyloxypropylrest, der 1-Trifluormethyl-2,2,2-trifluorethyloxypropylrest, der Perfluor-iso-propyloxyethylrest, der Perfluor-isopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste wie der Glycidoxypropylrest; schwefelfunktionelle Reste wie der 3-Mercaptopropylrest.

Bevorzugt als Reste R sind Kohlenwasserstoffreste mit 1 bis 10 Kohlenstoffatomen. Vorzugsweise sind mindestens 80 %, inbesondere mindestens 90 % der Reste R Methylreste. Vorzugsweise ist der Durchschnittswert für die Zahl n in Formel (I) so gewählt, daß das Polydiorganosiloxan der Formel (I) eine Viskosität von mehr als 1000 mPa.s, insbesondere von mehr als 10 000 mPa.s, jeweils gemessen bei 25°C, besitzt.

Die als Ausgangsstoffe für die erfindungsgemäßen Dispersionen als Kondensationskatalysatoren verwendbaren (Organo-)Metallverbindungen sind insbesondere die Salze von Carbonsäuren, die Alkoholate und die Halogenide der Metalle Pb, Zn, Zr, Ti, Sb, Fe, Cd, Sn, Ba, Ca und Mn. Besonders bevorzugt sind (Organo-)Zinnverbindungen von Carbonsäuren mit 1 bis 18 Kohlenstoffatomen sowie (Organo-)Zinnhalogenide, insbesondere Organozinn-Naphthenate, -octoate, -hexoate, -laurate, -acetate, -bromide und -chloride.

Beispiele für solche (Organo-)Zinnverbindungen sind Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat. Ganz besonders bevorzugt sind Diorganozinndicarboxylate, insbesondere Dibutylzinndilaurat, Dioctylzinndilaurat, Dibutylzinndiacetat und Dioctylzinndiacetat.

Obwohl durch die obige Formel (II) nicht ausgedrückt, kann das Siliconharz bedingt durch seine Herstellung bis zu 10 Gew.% Si-gebundene Hydroxylgruppen und/oder Alkoxygruppen enthalten.

Bevorzugte Reste R in Formel (II) sind Methyl-, Ethyl-, Vinyl- und Phenylreste, insbesondere Methylreste.

Die erfindungsgemäß verwendbaren Siliconharze, also insbesondere solche der Formel (II), sind im Gegensatz zu niedermolekularen Harzen in üblichen Lösungsmitteln, wie Toluol und Dichlormethan, unlöslich.

Vorzugsweise enthalten die erfindungsgemäßen wäßrigen Silicondispersionen Füllstoffe. Beispiele für Füllstoffe sind verstärkende Füllstoffe, also Füllstoffe mit einer BET-Oberfläche von mindestens 50 $m^2/g$, wie pyrogen hergestellte Kieselsäure, gefällte Kieselsäure, Aluminiumoxid und Ruß; nicht verstärkende Füllstoffe, also Füllstoffe mit einer BET (Brunauer, Emmet und Teller)-Oberfläche von weniger als 50 m$^2$/g, wie Ton, Quarzmehl, Kreide, Glimmer, Zinkoxid, Titandioxid u. a. mehr. Füllstoffe werden vorzugsweise höchstens in Mengen von 150 Gewichtsteilen, bezogen auf 100 Gewichtsteile in den endständigen Einheiten Hydroxylgruppen aufweisendes Organopolysiloxan verwendet.

Die als Ausgangsstoffe für die erfindungsgemäßen Dispersionen verwendbaren hochmolekularen Siliconharze, insbesondere also solche der Formel (II), können beispielsweise aus niedermolekularen Siliconharzen hergestellt werden, welche darstellbar sind durch Solvolyse und Kondensation von einer Lösung der entsprechenden Silane mit Si-gebundenen Chloratomen in einem in Wasser nicht mischbaren Lösungsmittel mittels eines Alkohol/Wasser-Gemisches. Solche Verfahren sind u. a. in W. Noll, Chemistry and Technology of Silicones, Academic Press, Orlando etc., 1968 auf den Seiten 190 bis 208 beschrieben. Aus den genannten niedermolekularen Siliconharzen werden die als Ausgangsstoffe für die erfindungsgemäßen Emulsionen verwendbaren hochmolekularen Siliconharze vorzugsweise durch Kondensation der genannten niedermolekularen Siliconharze in Dispersion hergestellt. Die niedermolekularen Siliconharze können ohne Verwendung von organischen Lösungsmitteln dispergiert werden, falls ihr Erweichungspunkt unter 100°C liegt. Andernfalls sind geringe Mengen an organischen Lösungsmitteln notwendig. Die Dispersionen von hochmolekularem Siliconharz können hergestellt werden, indem man eine Dispersion eines relativ niedermolekularen Siliconharzes mit Kondensationskatalysator(en) versetzt und einige Zeit lagert, vorzugsweise bei Temperaturen von 0°C bis 100°C, insbesondere bei Temperaturen von 15°C bis 30°C. Als Kondensationskatalysatoren kommen vorzugsweise Säuren in Betracht, wie Dodecylbenzolsulfonsäure oder Alkylsulfonsäuren, Basen, wie Amine, Alkalimetall-, Ammonium- und Phosphoniumhydroxide, sowie amphotere Verbindungen, wie die als (Organo-)Metallverbindungen genannten Verbindungen. Werden Säuren oder Basen als Kondensationskatalysatoren eingesetzt, so werden diese nach der beschriebenen Lagerung in der Regel neutralisiert.

Die so hergestellten Siliconharzdispersionen sind milchig trübe; die Siliconharzpartikel haben also einen mittleren Teilchendurchmesser von mindestens 200 nm. Diese Siliconharzdispersionen sind praktisch unbegrenzt lagerstabil und bilden nach dem Trocknen glasartige, trockene, in üblichen Lösungsmitteln wie Toluol und Dichlormethan unlösliche Filme.

Die erfindungsgemäßen Dispersionen werden im allgemeinen durch Emulgatoren stabilisiert. Es können kationaktive, anionaktive, ampholytische sowie nichtionische Emulgatoren verwendet werden. Diese Emulgatoren sowie deren Dosierung sind dem Fachmann hinreichend bekannt. Es kann eine Art von Emulgator, beispielsweise ein anionaktiver, es können auch Gemische von mindestens zwei Arten von Emulgatoren verwendet werden, beispielsweise ein Gemisch aus mindestens einem anionaktiven mit mindestens einem nichtionischem Emulgator. Die Emulgatoren können als solche der zu dispergierenden bzw. als Dispersion zu stabilisierenden Mischung zugegeben werden, sie können auch aus einem Vorläufer, beispielsweise der entsprechenden Säure, Base oder eines Salzes des eigentlichen Emulgators in der zu dispergierenden bzw. als Dispersion zu stabilisierenden Mischung durch chemische Reaktion(en) gebildet werden.

Vorzugsweise ist zumindest ein anionaktiver Emulgator in der erfindungsgemäßen Dispersion zugegen.

Die anionaktiven Emulgatoren sind vorzugsweise die Salze der bei der Emulsionspolymerisation zur Ausbildung in den endständigen Einheiten Hydroxylgruppen aufweisenden Diorganosiloxans verwendeten oberflächenaktiven Sulfonsäuren nach US-PS 3 294 725, wo die oberflachenaktiven Sulfonsäuren und Salze davon angegeben sind. Die Alkali- oder Ammoniumsalze der Sulfonsäuren sind bevorzugt, insbesondere die Kaliumsalze. Als Beispiele für die Sulfonsäuren seien aliphatisch substituierte Benzolsulfonsauren, aliphatisch substituierte Naphthalinsulfonsäuren, aliphatische Sulfonsäuren, Silylalkylsulfonsäuren und aliphatisch substituierte Diphenylethersulfonsäuren genannt. Auch andere anionische Emulgiermittel können verwendet werden, beispielsweise Alkalisulforizinoleate, sulfonierte Glycerinester von Fettsäuren, Salze von sulfonierten einwertigen Alkoholestern, Amide von Aminosulfonsäuren, beispielsweise das Natriumsalz von Oleylmethyltaurid, Alkalisalze von sulfonierten aromatischen Kohlenwasserstoffen, wie Natrium-alpha-naphthalin-monosulfonat, Kondensationsprodukte von Naphthalinsulfonsäuren mit Formaldehyd und Sulfate, wie Ammoniumlaurylsulfat, Triethanolaminlaurylsulfat und Natrium-laurylethersulfat.

Nichtionische Emulgatoren werden vorzugsweise zusätzlich zu anionaktivem Emulgator verwendet. Beispiele für derartige nichtionische Emulgatoren sind Saponine, Additionsprodukte von Fettsäuren mit Ethylenoxid, wie Dodecansäureester mit Tetraethylenoxid, Additionsprodukte von Ethylenoxid mit Sorbitantrioleat, Additionsprodukte von phenolischen Verbindungen mit Seitenketten mit Ethylenoxid, wie Additionsprodukte von Ethylenoxid mit Isododecylphenol, und Iminderivate, wie polyerisiertes Ethylenimin, Additionsprodukte von Alkoholen mit Ethylenoxid, wie Polyethylenglykol-(10)-isotridecylether.

Beispiele für kationaktive Emulgatoren sind Fettamine, quaternäre Ammoniumverbindungen, quaternäre Verbindungen des Pyridins, Morpholins und Imidazolins.

Beispiele für ampholytische Emulgatoren sind langkettige substituierte Aminosäuren, wie N-Alkyl-di-(aminoethyl-)glycin, N-Alkyl-2-aminopropionat, sowie Betaine, wie (3-Acylaminopropyl)-dimethylglycin und Alkylimidazoliumbetaine.

Vorzugsweise werden bei der Herstellung der erfindungsgemäßen Dispersion, bezogen auf 100 Gewichtsteile in den endständigen Einheiten Hydroxylgruppen aufweisende Polydiorganosiloxane; 0,15 bis 7 Gewichtsteile (Organo-)Metallverbindung(en), sowie 5 bis 70 Gewichtsteile Siliconharz eingesetzt.

Die für die Stabilisierung der erfindungsgemäßen Dispersionen vorteilhafte Menge an Emulgator ist stark von der Zusammensetzung der jeweiligen Dispersion abhängig. Bezogen auf das Gewicht der Dispersion mit Ausnahme des Wasseranteils genügen im allgemeinen 1 bis 20 Gewichtsprozent an Emulgator(en).

Die erfindungsgemäßen Silicondispersionen können zusätzliche Bestandteile zur Modifizierung der Eigenschaften der Dispersionen, bzw. der aus diesen erhaltenen elastomeren Produkte enthalten. Zur Verbesserung der Haftung der erfindungsgemäßen Dispersionen nach Verdampfung ihrer Lösungsmittelanteile auf dem Untergrund, auf dem die Dispersionen aufgebracht worden sind, können Haftvermittler zugesetzt werden. Als besonders vorteilhaft in dieser Hinsicht erwies sich der Einsatz von aminofunktionellen Silanen, wie N-(2-Aminoethyl)-3-aminopropyltrialkoxysilanen, bei denen der Alkoxyrest ein Methoxy-, Ethoxy-, n-Propoxy- oder Isopropoxyrest oder Butoxyrest ist.

Weitere Stoffe, die in den erfindungsgemäßen Dispersionen enthalten sein können, sind Weichmacher, wie $\alpha,\omega$-Trimethylsiloxypolydimethylsiloxan, Schaumverhütungsmittel, organische Lösungsmittel sowie Thixotropier- und Dispergiermittel. Beispiele für Thixotropiermittel sind Carboxymethylcellulose und Polyvinylalkohol. Beispiele für Dispergiermittel sind Polyacrylsäuresalze und Polyphosphate. Die genannten Thixotropier- und Dispergiermittel haben teilweise auch emulgierende Eigenschaften, so daß sie als Emulgatoren benutzt werden können. Beispiele für organische Lösungsmittel sind Kohlenwasserstoffe, wie Petrolether verschiedener Siedebereiche, n-Pentan, n-Hexan, Hexan-Isomerengemisch, Toluol, Xylol; organische Lösungsmittel werden vorzugsweise höchstens zu 5 Gew.%, bezogen auf das Gewicht der Dispersion, insbesondere gar nicht, eingesetzt.

Von jeder der vorstehend als mögliche Komponenten in den bzw. als Ausgangsstoffe für die erfindungsgemäßen Dispersionen genannten Gruppen von Stoffen kann jeweils als eine Komponente ein Stoff dieser Gruppe, es kann aber auch ein Gemisch aus mindestens zwei verschiedenen dieser Stoffe verwendet werden. So kann beispielsweise ein Gemisch aus mindestens zwei in den endstandigen Einheiten Hydroxylgruppen aufweisenden Organopolysiloxanen eingesetzt werden.

In den erfindungsgemäßen Dispersionen wurden Feststoffgehalte von über 80 Gew.% erreicht. Als Feststoffgehalt ist hier der Gewichtsanteil aller Bestandteile der Dispersion außer Wasser und, falls verwendet, organische(s) Lösungsmittel am Gesamtgewicht der Dispersion zu verstehen. Vorzugsweise haben die erfindungsgemäßen Dispersionen Feststoffgehalte von 20 bis 85 Gewichtsprozent. Niedrigere Feststoffgehalte sind selbstverständlich möglich, jedoch wirtschaftlich wenig sinnvoll. Vorzugsweise werden die als Ausgangsstoffe für die erfindungsgemäßen Dispersionen verwendeten, in den endständigen Einheiten Hydroxylgruppen aufweisenden Polydiorganosiloxane sowie die Siliconharze vor dem Vermischen mit den jeweils ubrigen Komponenten in Wasser emulgiert bzw. dispergiert. Auch für die (Organo-)Metallverbindung(en) kann dies von Vorteil sein. Es ist auch möglich, zwei oder mehrere der vorstehend als mögliche Ausgangsstoffe für die erfindungsgemäßen wäßrigen Silicondispersionen genannten Komponenten zuerst in Substanz miteinander zu vermischen und anschließend dieses Gemisch in Wasser zu dispergieren, es sei denn, dieses Gemisch ist an sich schon bei Raumtemperatur vulkanisationsfähig.

Die erfindungsgemäßen wäßrigen Silicondispersionen können für alle Zwecke eingesetzt werden, für die auch bisher Silicondispersionen verwendet wurden. Sie härten schon bei Raumtemperatur nach Verdampfen des Lösungsmittelanteils zu Elastomeren aus. Sie können beispielsweise als Dichtmassen, Farben und Anstrichsysteme und als elektrisch isolierende bzw. leitende, hydrophobe, klebrige Stoffe abweisende Beschichtungssysteme oder als Grundlagen bzw. Zusätze zu solchen Systemen dienen. Sie bilden auf Papier, Textilien, mineralischen Baustoffen, Kunststoffen und vielen anderen Unterlagen festhaftende Überzüge.

In dem nachstehend beschriebenen Beispiel beziehen sich die Mengenangaben, falls nicht anders angegeben, auf das Gewicht. Als Emulgator wurde unter anderem Polyethylenglykol-(10)-isotridecylether (nachstehend als "E" bezeichnet), eingesetzt. Sofern nicht anders angegeben, wurden die nachstehenden Beispiele bei einem Druck von 0,10 MPa (abs.) und bei Raumtemperatur, also etwa 22°C, bzw. bei der Temperatur, die sich beim Zusammengeben der Reaktanden bei Raumtemperatur ohne zusätzliche Heizung oder Kühlung einstellt, durchgeführt.

**A: Dispersion von in den endständigen Einheiten Hydroxylgruppen aufweisendem Polydiorganosiloxan:**

Eine aus 1 400 g eines $\alpha,\omega$-Dihydroxypolydimethylsiloxans einer Viskosität von 100 mm$^2$/s bei 25 °C, 30 g eines Salzes, das gewonnen wurde durch Neutralisation von Dodecylbenzolsulfonsäure mit N-Methylethanolamin, 30 g Dodecylbenzolsulfonsäure und 540 g Wasser hergestellte Emulsion wurde nach 20 h Lagerung bei Raumtemperatur mit Diethylamin neutralisiert. Die Viskosität der Ölphase betrug ca. 1 600 000 mPa.s bei 25 °C.

**B: Dispersion von (Organo-)Metallverbindung:**

Aus 50 g Dibutylzinndilaurat, 5 g E und 45 g Wasser wurde eine Emulsion hergestellt.

**C: Siliconharzdispersion:**

Eine aus 50 g eines aus Einheiten der Formel

$$(CH_3)_{1,05}SiO_{2,95/2}$$

bestehenden Siliconharzes, das noch ca. 1 % Toluol enthielt, 3 g Dodecylbenzolsulfonsäuresalz und 47 g Wasser bereitete Dispersion wurde mit 1 g Dodecylbenzolsulfonsäure angesäuert und 1 Woche bei Raumtemperatur belassen und anschließend mit N-Methylethanolamin neutralisiert. Die Dispersion war milchig trüb und bildete auf einer Glasplatte nach dem Trocknen einen klaren, glasharten Film, der bei mechanischer Belastung zu einem weißen Pulver zerfiel. Das derart dispergierte Harz war in Toluol unlöslich und hatte keinen Erweichungspunkt.

Beispiel

Aus 100 g der Polydiorganosiloxandispersion A, 25 g Siliconharzdispersion C, 60 g gefällter Kreide und 1 g Dispersion B von (Organo-)Metallverbindung wurde eine cremige, standfeste Paste hergestellt, die nach dem Auftragen als Raupe oder Folie innerhalb eines Tages zu einem trockenen Elastomer aushärtete. Nach Lagerung der Paste von 3 Tagen bei Raumtemperatur (RT), 1 Monat bei 40 °C und 3 Monaten bei 40 °C wurden 2 mm dicke Folien hergestellt und nach 14 Tagen Lagerung bei Raumtemperatur auf die mechanischen Eigenschaften untersucht. Die Ergebnisse sind in der folgenden Tabelle wiedergegeben.

Tabelle

| Lagerung der Paste | Shore-A-Härte | Reißfestigkeit in N/mm$^2$ | Reißdehnung in % | Weiterreißwiderstand in N/mm | Zugfestigkeit bei 100 % Dehnung in N/mm$^2$ |
|---|---|---|---|---|---|
| 3 Tage, RT | 32 | 0,91 | 600 | 3,4 | 0,5 |
| 1 Monat, 40 °C | 29 | 0,42 | 540 | 3,4 | 0,24 |
| 3 Monate,40 °C | 27 | 0,33 | 420 | 2,0 | 0,18 |

**Patentansprüche**

**1.** Wäßrige Silicondispersionen, herstellbar unter Verwendung der Ausgangsstoffe

a) in den endständigen Einheiten Hydroxylgruppen aufweisende Polydiorganosiloxane und

b) (Organo-)Metallverbindung(en),

dadurch gekennzeichnet,

daß sie zusätzlich als Ausgangsstoffe

c) hochmolekulare(s), in Toluol unlösliche(s), Siliconharz(e) einer mittleren Teilchengröße von mindestens $2.10^{-1}\mu m$

der Formel

$$R_xSiO_{\frac{4-x}{2}} \qquad\qquad (II)$$

enthalten, worin

R    gleiche oder verschiedene Kohlenwasserstoffreste mit 1 bis 18 Kohlenstoffatomen, die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind, und

x  eine Zahl mit einem durchschnittlichen Wert von 0,5 bis 1,6 bedeutet,

wobei,

bezogen auf 100 Gewichtsteile a) Polydiorganosiloxan(e) 0,01 bis 10 Gewichtsteile b) (Organo-)Metallverbindung(en),

sowie 1 bis 150 Gewichtsteile c) Siliconharz(e) eingesetzt werden,

und wobei die

wäßrigen Silicondispersionen maximal 20 Gewichts-ppm, bezogen auf die Summe der Gewichte von eingesetzten

a) Polydiorganosiloxan(en)

b) (Organo-)Metallverbindung(en),

c) Siliconharz(en)

an

d) Siliconat(en)

als Ausgangsstoff(e) enthalten.

2.  Wäßrige Silicondispersionen nach Anspruch 1, dadurch gekennzeichnet, daß sie zusätzlich

e) Füllstoff(e) enthalten.

3.  Wäßrige Silicondispersionen nach Anspruch 1 oder 2, dadurch gekennzeichnet, daß das bzw. die hochmolekulare(n), in Toluol unlösliche(n), Siliconharz(e) c) keinen Erweichungspunkt hat bzw. haben.

## Claims

1.  Aqueous silicone dispersions which can be prepared using the starting materials

a) polydiorganosiloxanes which contain hydroxyl groups in the terminal units and

b) (an) (organo)metallic compound(s), characterised in that they additionally contain, as starting materials,

c) (a) high-molecular-weight, toluene-insoluble silicone resin(s) having a mean particle size of at least $2.10^{-1} \mu m$

of the formula

$$R_x SiO_{\frac{4-x}{2}}$$  (II)

in which

R  denote identical or different hydrocarbon radicals which have 1 to 18 carbon atoms and are optionally substituted by halogen atoms, amino groups, ether groups, ester groups, epoxy groups, mercapto groups, cyano groups or (poly)glycol radicals, the latter being constructed from oxyethylene and/or oxypropylene units, and

x  denotes an integer with an average value of 0.5 to 1.6,

where,

based on 100 parts by weight of a) polydiorganosiloxane(s), from 0.01 to 10 parts by weight of b) (organo)metallic compound(s) and from 1 to 150 parts by weight of c) silicone resin(s) are employed, and where the aqueous silicone dispersions contain a maximum of 20 ppm by weight, based on the sum of the weights of

a) polydiorganosiloxane(s)

b) (organo)metallic compound(s),

c) silicone resin(s)

employed, of

d) siliconate(s)

as starting material(s).

**2.** Aqueous silicone dispersions according to Claim 1, characterised in that they additionally contain
e) filler(s).

**3.** Aqueous silicone dispersions according to Claim 1 or 2, characterised in that the high-molecular-weight, toluene-insoluble silicone resin(s) does (do) not have a softening point.

**Revendications**

**1.** Dispersions aqueuses de silicones préparables avec les matières initiales suivantes : à base d'$\alpha,\omega$-dihydroxypolyorgano-siloxanes, de résines de
a) polydiorganosiloxanes à groupes hydroxyliques sur les motifs terminaux,
b) un ou plusieurs composés (organo)métalliques, et en outre, ce qui les caractérise,
c) une ou plusieurs résines de silicones à haute masse moléculaire et insolubles dans le toluène, en particules d'une dimension moyenne d'au moins $2.10^{-1}$ $\mu$m,
de formule

$$R_x SiO_{\frac{4-x}{2}} \qquad\qquad (II)$$

dans laquelle :
R    désigne des radicaux hydrocarbonés identiques ou différents ayant de 1 à 18 atomes et pourvant avoir éventuellement comme substituants des atomes d'halogènes ou des groupes amino, d'éthers, d'esters, époxy, mercapto, cyano ou (poly)glycoliques, ces derniers étant formés de motifs oxyéthylène et/ou oxypropylène, et
x    est un nombre de valeur moyenne 0,5 à 1,6,
avec,
pour 100 parties en poids du ou des polydiorganosiloxanes (a), de 0,01 à 10 parties en poids du ou des composés organo(métalliques) (b),
et de 1 à 150 parties en poids de la résine ou des résines de silicones (c),
et ces dispersions aqueuses contenant au maximum 20 ppm en poids d'un ou plusieurs siliconates (d) par rapport à la somme des poids
a) des polydiorganosiloxanes,
b) des composés (organo)métalliques, et
c) des résines de silicones
comme matières initiales.

**2.** Dispersions selon la revendication 1, caractérisées en ce qu'elles comprennent en outre
e) une ou plusieurs charges.

**3.** Dispersions selon la revendication 1 ou 2, caractérisées en ce que les résines de silicones (c) à haute masse moléculaire, insolubles dans le toluène, ne donnent pas de point de ramollissement.